Europäisches Patentamt

European Patent Office

Office européen des brevets

(11) Publication number: **0 227 262**
**A1**

# (12) EUROPEAN PATENT APPLICATION

(21) Application number: 86308389.5

(22) Date of filing: 28.10.86

(51) Int. Cl.⁴: **A 23 F 5/26**
**A 23 F 5/48**

(30) Priority: 13.11.85 GB 8528010

(43) Date of publication of application:
01.07.87 Bulletin 87/27

(84) Designated Contracting States:
AT BE CH DE ES FR GB GR IT LI LU NL SE

(71) Applicant: GENERAL FOODS LIMITED

Banbury Oxfordshire, OX16 7QU(GB)

(72) Inventor: Khatachourian, Eva Louise
10 Kingsway
Banbury Oxon(GB)

(72) Inventor: Lascelles, Le Gay John
2 Old Vicarage Gardens
Cropredy Nr. Banbury Oxon(GB)

(72) Inventor: Rowan, William
c/o General Foods Corp. 250 North Street
White Plains, N.Y, 10625(US)

(74) Representative: Allard, Susan Joyce et al,
BOULT, WADE & TENNANT 27 Furnival street
London EC4A 1PQ(GB)

(54) **Coffee production.**

(57) A process for the production of a soluble coffee product which process comprises the steps of:-

(i) continuously contacting roast and ground coffee with steam under a vacuum in a steaming vessel;

(ii) withdrawing a volatile stream from the vessel and condensing the volatile stream to produce a flavour and/or aroma enhancing constituent;

(iii) withdrawing steamed roast and ground coffee from the vessel;

(iv) blending at least a portion of the steamed roast and ground coffee from step (iii) with at least one unsteamed roast and ground coffee;

(v) subjecting the blend from step (iv) to extraction with an extraction liquid to extract soluble components therefrom and thereby produce a coffee extract;

(vi) adding the condensate, or a part of the condensate, produced in step (ii) to the said coffee extract; and

(vii) drying the coffee extract in order to produce a soluble coffee product.

EP 0 227 262 A1

## COFFEE PRODUCTION

The present invention relates to coffee production and, in particular, to a process for preparing an improved soluble coffee product.

The problem of preparing soluble coffee products which resemble a home-brewed roast and ground coffee in flavour and aroma characteristics is well known. The preparation of commercial soluble coffee products comprising extracting soluble solids from coffee and then drying the resultant extract to a powder normally involves processing techniques which tend to degrade the flavourful coffee constituents which characterise freshly brewed roast and ground coffee. Processes such as dilute extraction, low temperature spray-drying and freeze-drying, which are designed to retain a large number of volatile constituents from the coffee, have met with varying degrees of success. Such processes, however, generally also involve increased costs.

Various methods have been suggested for enhancing soluble coffee products and one area of investigation has been the aroma obtained by steaming a bed of roast and ground coffee, see for example United States Patents Nos. 3164474 and 3615665.

We have now developed an improved process for preparing a natural coffee flavour/aroma enhancing constituent in which a bed of roast and ground coffee is subjected to steaming under a vacuum and the steamed roast and ground coffee mixed with an unsteamed roast and ground coffee, prior to extraction using well known techniques.

Accordingly, the present invention provides a process for the production of a soluble coffee product which process comprises the steps of:-

(i) continously contacting roast and ground coffee with steam under a vacuum in a steaming vessel;

(ii) withdrawing a volatile stream from the vessel and condensing the volatile stream to produce a flavour and/or aroma enhancing constituent;

(iii) withdrawing steamed roast and ground coffee from the vessel;

(iv) blending at least a portion of the steamed roast and ground coffee from step (iii) with at least one unsteamed roast and ground coffee;

(v) subjecting the blend from step (iv) to extraction with an extraction liquid to extract soluble components therefrom and thereby produce a coffee extract;

(vi) adding the condensate, or a part of the condensate, produced in step (ii) to the said coffee extract; and

(vii) drying the coffee extract in order to produce a soluble coffee product.

As used herein the term "roast and ground coffee" is meant to include both a single variety and a blend of coffee varieties and both natural and decaffeinated coffees.

The terms "aroma" and "flavour" are used to describe the steam extracted volatile constituent which, when added to the soluble coffee product, may contribute a flavour and/or an aroma to the product. In many cases the constituent will contribute both flavour and aroma to the product.

In carrying out the process of the present invention the steaming in step (i) is generally carried out in a vertical vessel which is maintained under vacuum, the roast and ground coffee then being fed to the top of the vertical vessel continuously at a pre-determined rate. The roast and ground coffee is preferably fed to the vessel at a flow rate in the range of from 5 to 2000 kilograms/hr. The roast and ground coffee is generally fed to the vessel through an inlet chamber equipped with a double valve arrangement so as to maintain the vacuum in the steaming vessel. Steam is generally introduced counter-currently through a pipe inlet provided at the side at the bottom of the vessel. The steam is then passed up through the vessel at a pre-determined velocity which is dictated by the vacuum pressure maintained in the vessel and the steam flow rate. The steam velocity will generally be in the range of from 0.5 to 10 metres/sec. Whilst a counter-current steam flow is preferred, it is also possible to introduce steam into the vertical vessel co-currently with the roast and ground coffee.

The throughput of ground coffee through the steaming vessel is controlled by varying the frequency of the double valve operation on the outlet chamber. The column is maintained full of ground coffee by adjustment of the frequency of the inlet double valve operation. Generally the column design will determine the height of the bed between the steam inlet and vapour outlet in the range of from 0.6:1 to 11:1 The column can incorporate more than one steam inlet at different heights so that the height: diameter ratio on the steamed bed can be varied for a single column.

The mass ratio of steam to roast and ground coffee can be selected up to a maximum of 2.7 parts by weight of steam per 1 part of roast and ground coffee. The preferred ratio is 0.04 to 0.3 parts by weight of steam to 1 part by weight of ground coffee.

The contact time of the roast and ground coffee with the steam may be varied over a wide range of from 1 to 120 minutes, the preferred residence time being in the range of from 5 to 10 minutes.

The steaming of the roast and ground coffee is carried out under a full or partial vacuum, the preferred operating range being from 1.5 to 25 psia, more preferably 4.5 to 10 psia.

Preferably the steaming vessel includes a variable speed agitator, such as a rotable shaft with paddles attached thereto, in order to improve the contact of the steam with the roast and ground coffee. The paddles on the rotatable shaft are preferably angled at about 45° to the vertical axis of the shaft, this arrangement causing the ground coffee to lift as the paddles rotate, thus increasing the contact of the coffee with the steam.

The volatile stream generally leaves the steaming vessel through a pipe or duct situated above the level of the roast and ground coffee in the vessel. The volatile stream is then condensed in step (ii) of the process, for example in a vertical shell and tube condenser maintained at the pressure and temperature of the steaming vessel.

The condensed volatile stream may be further treated, if desired, in a distillation column to separate the various components therefrom. For example, volatile acids may be removed in the bottom fractions thereby leaving top fractions containing the preferred flavour and/or aroma enhancing compounds. The condensate, or a part thereof, is added to a coffee extract before drying, for example by spray drying to produce a soluble coffee product.

The constituents of the volatile stream from step (ii) which do not condense are then generally passed to a gas scrubber where they are absorbed into water generally at a temperature of less than 10°C. The gas scrubber operates with recycling water, a portion of which is taken off and fresh make up water added in the same amount. For example a scrubber may operate with a recycled volume of 100 to 1000 l of water, the offtake from which would be about 3 l per hour. An alternative method of scrubbing the non-condensible volatile stream is to absorb the stream into fresh water and feed this stream into a distillation column together with the condensed volatile stream. The offtake from the scrubber is also preferably added to the coffee extract before drying in order to enhance the flavour of the coffee product.

The moisture content of the steamed roast and ground coffee product which is produced by the process of the invention may be varied by spraying the roast and ground coffee with water as it enters the steaming vessel. It is generally preferred for the steamed roast and ground coffee to have a moisture content in the range of from 15 to 25% by weight, more preferably 15 to 19% by weight, prior to blending with the non-steamed roast and ground coffee.

In step (iv) of the process of the invention the steamed roast and ground coffee produced in stages (i) to (iii) is blended with at least one non-steamed roast and ground coffee. For example a steamed Arabica or a steamed Brazilian coffee may be blended with a non-steamed Robusta prior to extraction in step (v) of the process. Preferably from 10 to 60% by weight of a steamed roast and ground coffee is blended with from 90 to 40% by weight of a non-steamed roast and ground coffee. More preferably from 30 to 50% by weight of a steamed roast and ground coffee is blended with from 70 to 50% by weight of a non-steamed roast and ground coffee. It will be understood by those skilled in the art that the blending ratio of the steamed roast and ground coffee will be chosen so that the end product exhibits the desired flavour characteristics.

The addition to the coffee extract prior to drying of the flavour and/or aroma enhancing constituent produced in step (ii) of the process of the present invention enhances the woody, earthy and roast and ground flavours in the final soluble coffee product. Accordingly, by varying the amount of the flavour and/or aroma enhancing constituent added to the coffee extract prior to drying it is possible to obtain a range of soluble coffee products from ones with dominant roast and ground flavours to ones with smoother and more subtle characteristics.

Typical extraction processes which may be used in these processes include semi-continuous counter-current multi-stage extraction, continuous counter-current extraction and single stage extraction. Commercial processes generally involve the semi-continuous, counter-current extraction of soluble coffee components from roast and ground coffee contained in a series of extraction columns. The extraction columns contain coffee of varying degrees of extraction, or depletion of soluble components. The extraction liquid is generally water which is fed first to the extraction column containing the most extracted coffee and the extraction liquid then flows through the columns containing coffee of a progressively lesser degree of extraction. The liquid is then drawn off as a coffee extract from the final extraction column in the set which generally contains the least extracted coffee, typically fresh unextracted roast and ground coffee. Extract concentrations are typically in the range of from 10 to 30% by weight solids.

The drying of the coffee extract may be carried out by freeze drying or low temperature spray drying, which techniques are well known in the art. If desired, the extract may be concentrated, for example

- 7 -

0227262

by evaporation, before drying.

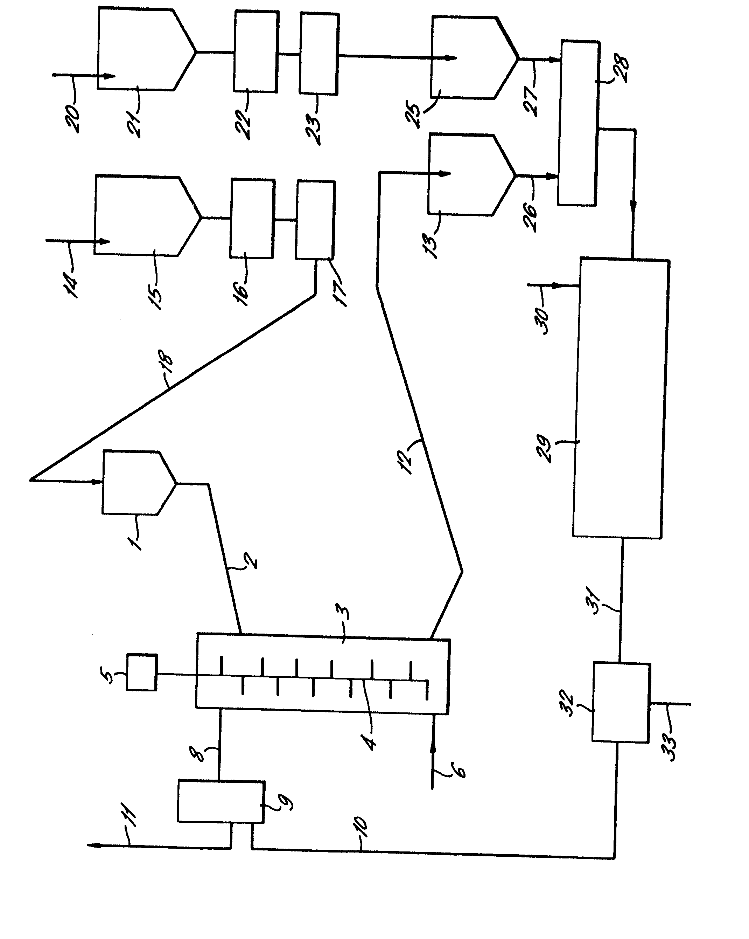

A process for the production of a soluble coffee product according to the process of the invention will be further described with reference to the accompanying Figure of the drawings.

Referring to the Figure, roast and ground coffee from a hopper 1 is passed via line 2 to steaming vessel 3 which is equipped with an agitator 4 comprising a vertical shaft with paddles attached thereto. The speed of the agitator may be varied by varying the speed of motor 5. Steam is fed to the steaming vessel via line 6 and a volatile stream emerges from the steaming vessel along line 8. This volatile stream is passed to a condenser 9 and a condensate is removed from the condenser along line 10. The non-condensible constituents of the volatile stream exit from the condenser along line 11 and are then passed to a gas scrubber (not shown). The steamed roast and ground coffee leaves steaming vessel 3 via line 12 and is passed to a hopper 13.

The roast and ground coffee supplied to hopper 1 is obtained by feeding roast coffee beans along line 14 to a hopper 15, the roast beans then being passed to a grinder 16 where they are ground according to conventional techniques. The ground coffee particles leave the grinder 16 and are then passed through a screen 17 where the particles of the desired size are separated from those that are considered to be too fine. The ground coffee particles of the desired size are then passed along line 18 to the hopper 1. A further supply of roast coffee beans is fed along line 20 to another hopper 21, the roast beans then being passed to a grinder 22 where they are ground according to conventional techniques. The ground coffee particles leave the grinder 22 and are then passed through a screen 23 where particles of the desired size are separated from those that are too fine. The ground coffee particles of the desired size are passed to hopper 25. The steamed roast and ground coffee from hopper 13 and the non-steamed roast and ground coffee from hopper 25 are passed along lines 26 and 27, respectively, to a blender 28. In the blender 28 a desired blend of the steamed and non-steamed roast and ground coffee is prepared and this blend is then filled into extraction columns contained in extraction unit 29. The extraction columns (which are not shown) are filled and arranged in a conventional manner which requires no further description. Water as the extraction liquid at an elevated temperature, e.g. $170^{\circ}$ to $190^{\circ}C$ is passed along line 30 through the arrangement of extraction columns. A coffee extract is passed from the extraction unit along line 31 to a mixing chamber 32 where it is mixed with the condensate stream 10 which may optionally be subjected to fractional distillation in order to remove unwanted compounds therefrom. The offtake from the scrubber (not shown) may also be added to the coffee extract. The enhanced coffee extract leaving the mixing chamber 32 along line 33 is then dried by conventional means, such as lower-temperature spray drying or freeze drying in order to produce a soluble coffee product.

The present invention is further illustrated by the following Example.

## EXAMPLE 1

65 Kg/hr of roast and ground coffee was fed into the top of the steaming vessel in 2kg batches through a double valve arrangement. The vessel was held under 9.8 psia vacuum throughout the trial. A grounds residence time in the vessel of 6.5 minutes was maintained with a 9:1 height to diameter ratio. Steam

was introduced approximately $^1/3$ of the length up the column through a side pipe connection. The steam to grounds mass ratio was maintained at 0.05:1.3. Three 1/hour of steam aroma vapour was condensed in a vertical shell and tube condenser.

The steamed grounds were discharged from the vessel through a double valve arrangement and blended with non-steamed ground Robustas in the ratio of 40:60. This mixture was filled into an appropriate series of extraction columns and extracted in a conventional manner to provide a coffee extract which was concentrated to about 50% solids.

The non-condensible vapours from the steaming vessel were passed through an absorption column together with the non-condensible vapours from the shell and tube condenser which was at atmospheric pressure. The gases were scrubbed counter-currently with water at a temperature of below 10°C.

The condensed volatile stream was fed together with the water from the absorber (which contained absorbed volatiles) to a distillation column. The distillation column was run at 4.9 psia vacuum with a reflux ratio of 8:1 and a feed to distillate concentration ratio of 20:1. The distillation column top product which comprised a concentrated volatile stream void of the volatile acids was added back to the concentrated (about 56% solids) coffee extract in the correct stoichiometric ratio and the mixture then spray dried.

The spray dried product was evaluated for flavour. It was found to contain low levels of "woody" and "tarry charred" notes and to have a higher aromatic impact when compared to a sample in which the extraction was carried out on non-steamed roast and ground coffee only.

- 10 -

0227262

CLAIMS:

1. A process for the production of a soluble coffee product which process comprises the steps of:-
   (i) continously contacting roast and ground coffee with steam under a vacuum in a steaming vessel;
   (ii) withdrawing a volatile stream from the vessel and condensing the volatile stream to produce a flavour and/or aroma enhancing constituent;
   (iii) withdrawing steamed roast and ground coffee from the vessel;
   (iv) blending at least a portion of the steamed roast and ground coffee from step (iii) with at least one unsteamed roast and ground coffee;
   (v) subjecting the blend from step (iv) to extraction with an extraction liquid to extract soluble components therefrom and thereby produce a coffee extract;
   (vi) adding the condensate, or a part of the condensate, produced in step (ii) to the said coffee extract; and
   (vii) drying the coffee extract in order to produce a soluble coffee product.

2. A process as claimed in claim 1 wherein the steaming in step (i) is carried out in a vertical vessel maintained under vacuum, the roast and ground coffee being fed continuously to the top of the vertical vessel.

3. A process as claimed in claim 2 wherein the coffee is fed to the vessel at a flow rate in the range of from 5 to 2000 kilograms/hour.

4. A process as claimed in any one of the preceding claims wherein the steam is introduced in step (i) counter-currently to the bottom of the vessel.

5. A process as claimed in claim 4 wherein the steam velocity is in the range of from 0.5 to 10 metres/sec.

6. A process as claimed in any one of the preceding claims where the height to diameter ratio of the bed of roast and ground coffee steamed in step (i) is in the range of from 0.6:1 to 11:1

7. A process as claimed in any one of the preceding claims wherein the mass ratio of steam to ground coffee in step (i) is 0.04 to 0.3 parts by weight of steam to 1 part by weight of ground coffee.

8. A process as claimed in any one of the preceding claims wherein the contact time of the roast and ground coffee with the steam in step (i) is in the range of from 1 to 120 minutes.

9. A process as claimed in claim 8 wherein the contact time of the roast and ground coffee with the steam is in the range of from 5 to 10 minutes.

10. A process as claimed in any one of the preceding claims wherein the steaming is carried out under a partial vacuum of 1.5 to 25 psia.

11. A process as claimed in claim 10 wherein the steaming is carried out under a partial vacuum of 4.5 to 10 psia.

0227262

12. A process as claimed in any one of the preceding claims wherein the steaming vessel includes therein a variable speed agitator.

13. A process as claimed in any one of the preceding claims wherein the volatile stream is condensed in a condenser maintained at the pressure and temperature of the steaming vessel.

14. A process as claimed in any one of the preceding claims wherein in step (iv) from 10 to 60% by weight of the steamed roast and ground coffee is blended with from 90 to 40% by weight of the non-steamed roast and ground coffee.

15. A process as claimed in any one of the preceding claims wherein the extraction in step (v) is carried out as a semi-continuous, counter-current extraction process.

16. A process as claimed in any one of the preceding claims whrein the condensate produced in step (ii) is subjected to fractional distillation and the top fraction added to the coffee extract in step (vi).

17. A process as claimed in any one of the preceding claims wherein the non-condensible constituents of the volatile stream from step (ii) are passed to a gas scrubber where they are absorbed into water and the offtake from the scrubber is added to the coffee extract prior to drying.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A-1 421 729 (DOUWE EGBERTS) <br><br> * Abstracts, points 1-3; page 1, column 2, paragraph 3 - page 2, column 1 * <br><br>--- | 1-6,8, 10-15 | A 23 F 5/26 <br> A 23 F 5/48 |
| Y | CH-A- 563 792 (SOCIETE DES PRODUITS NESTLE) <br> * Claims I-II; sub-claims 1,2,4; figure 1; page 2, column 2 * <br><br>--- | 1-6,8, 10-15 | |
| A | GB-A-1 466 881 (GENERAL FOODS) <br><br> * Claims 1-6; page 1, lines 18-37; page 2, line 3 - page 3, line 2; figure * <br><br>--- | 1,3-6, 8-11, 13,16 | |
| A | EP-A-0 001 850 (PROCTER & GAMBLE) <br> * Claim 1; figure 1 * <br><br>----- | 1 | **TECHNICAL FIELDS SEARCHED (Int Cl 4)** <br><br> A 23 F |

The present search report has been drawn up for all claims

| Place of search | Date of completion of the search | Examiner |
|---|---|---|
| THE HAGUE | 16-02-1987 | DESMEDT G.R.A. |